# EUROPÄISCHE PATENTANMELDUNG

(11) **EP 2 657 676 A2**
(43) Veröffentlichungstag der Anmeldung: **30.10.2013**
(21) Anmeldenummer: 13002047.2
(22) Anmeldetag: 18.04.2013
(51) Int. Cl.: G01N 1/22

(54) **Messvorrichtung für Staub in Rauchgas**

(30) Priorität: 23.04.2012 DE 102012103563
(71) Anmelder: STEAG Powitec GmbH, 45219 Essen (DE)
(72) Erfinder: Wintrich, Franz, 45309 Essen (DE)
(74) Vertreter: Patentanwälte Hosenthien-Held und Dr. Held

(57) **Zusammenfassung**

Mittels einer Messvorrichtung (10) für Staub (So) in Rauchgas, mit einem Gehäuse (10) und mit wenigstens einem im Gehäuse (11) angeordneten Sensor (45) zur Erlangung von Messdaten der entnommenen Probe, sind während des Betriebs laufend Proben des Staubes (So) entnehmbar, wobei der Sensor (45) für Gas (G) sensitiv ist, welches am Staub(S₁) angelagert in das Gehäuse (11) gelangt.

## Beschreibung

Die Erfindung betrifft eine Messvorrichtung mit den Merkmalen des Oberbegriffs des Anspruches 1.

Aus der EP 2 215 448 B 1 ist eine Messvorrichtung der eingangs genannten Art für Rauchgas bekannt. Von der Verbrennungskammer eines Kraftwerks wird das Rauchgas mittels eines Kanals in Richtung Kamin geführt. Die Messvorrichtung ist auf der Außenseite der Kanalwand angeordnet. Ein Einlassrohr der Messvorrichtung, welches die Kanalwand durchdringt, ist mit einem gegen die Strömung gerichteten, offenen Ende versehen, mittels dessen es Rauchgas aus dem Kanal entnimmt und in das Innere der Messvorrichtung leitet. Mittels eines (Fliehkraft-)Abscheiders wird der Staub, insbesondere Flugasche, vom Gas getrennt, welches mittels eines die Kanalwand durchdringenden Auslassrohres wieder in den Kanal zurückgeführt. Der Staub gelangt durch ein Ventil in eine Kammer. Wenn ein gewisser Füllstand erreicht ist, schließt das Ventil, und der Staub wird einem Mikrowellenfeld ausgesetzt, dessen Dämpfung gemessen wird. Durch Beaufschlagung mit Druckluft wird der Staub komprimiert. Erneut wird mit dem Mikrowellenfeld in gleicher Weise gemessen. Mittels der Messdaten wird der Kohlenstoffgehalt des Staubs bestimmt. Danach wird der Staub wahlweise in einen Sammelbehälter oder durch das Auslassrohr in den Kanal geblasen.

Die DE 37 41 390 C2 beschreibt eine Messvorrichtung für Rauchgas, welche in einer Entstickungsanlage einer Großfeueranlage verwendet wird. Die Messvorrichtung weist ein Gehäuse und eine darin verschiebbaren Sonde auf, welche an verschiedenen Stellen eines Rauchgaskanals Proben entnehmen kann. Zur Abscheidung von Ammoniak und Schwefeloxiden enthält die Sonde einen (Zyklon-)Abscheider mit nachgeschalteten Filtern und einen Kondensator mit Kühlung. Zur Unterstützung der Zyklonfunktion saugt ein Gebläse aus dem Abscheider einen Teilstrom des Rauchgases ab und führt ihn wieder in den Rauchgaskanal. Ferner enthält die Sonde eine Heizung und eine Messstelle für Stickoxide und Sauerstoff.

Der vorliegenden Erfindung liegt die Aufgabe zugrunde, eine Messvorrichtung der eingangs genannten Art zu verbessern. Diese Aufgabe wird durch eine Messvorrichtung mit den Merkmalen des Anspruches 1 gelöst. Weitere vorteilhafte Ausgestaltungen sind Gegenstand der Unteransprüche.

Die im Rauchgas enthaltenen Gase sind teils in der Gasphase und teils am Staub angelagert, d.h. der Staub enthält feste Partikel und angelagerte (Gas-)Partikel. Die Gase entstehen bei der Verbrennung in der Feuerungsanlage oder werden nachträglich hinzugefügt, wie im Falle von Entstickungsanlagen, denen Ammoniak oder Harnstoff beigegeben wird. Um einen Schlupf der hinzugefügten Gase, also einen Überschuss, zu erkennen (und zu vermeiden), werden gattungsgemäße Messvorrichtungen eingesetzt. Die bekannten Messvorrichtungen untersuchen vornehmlich die Gasphase. Für die Untersuchung des Staubes werden Proben entnommen und extern (also "offline") untersucht.

Die erfindungsgemäße Messvorrichtung ist füreine alternative Untersuchung des Staubes vorgesehen: Sie untersucht die am Staub angelagerten Atome, Moleküle (beispielsweise Ammoniak) oder sonstigen Partikel, abgekürzt als angelagertes Gas bezeichnet, mittels des hierfür sensitiven Sensors. Vor der Untersuchung trennt die Messvorrichtung vorzugsweise das angelagerte Gas vom Staub, vorzugsweise durch Energiezufuhr. Während der Sensor dann quantitative Messdaten vom abgetrennten Gas liefert, können Messdaten des entgasten Staubes mittels einer Waage erlangt werden.

Mittels der erfindungsgemäßen Messvorrichtung sind Proben des Staubes entnehmbar, wobei der Staub mittels eines Abscheidefilters aus dem Rauchgas gefiltert ist. Der (für die Entnahme der Proben verwendete) Staub kann in einem Sammelbereich des Abscheidefilters gesammelt sein.

Indem die Messvorrichtung während des Betriebs laufend Proben des Staubes entnimmt, werden auch laufend Messdaten geliefert, d.h. die Untersuchung des Staubes mit angelagertem Gas erfolgt "online". Diese Messdaten können in eine Regelung eingehen, beispielsweise der Entstickungsanlage oder der gesamten Feuerungsanlage. Mit Variationen des Sensors kann die Erfindung bei verschiedenen stationären thermodynamischen Anlagen, insbesondere Kraftwerken, Müllverbrennungsanlagen und Zementwerken, eingesetzt werden.

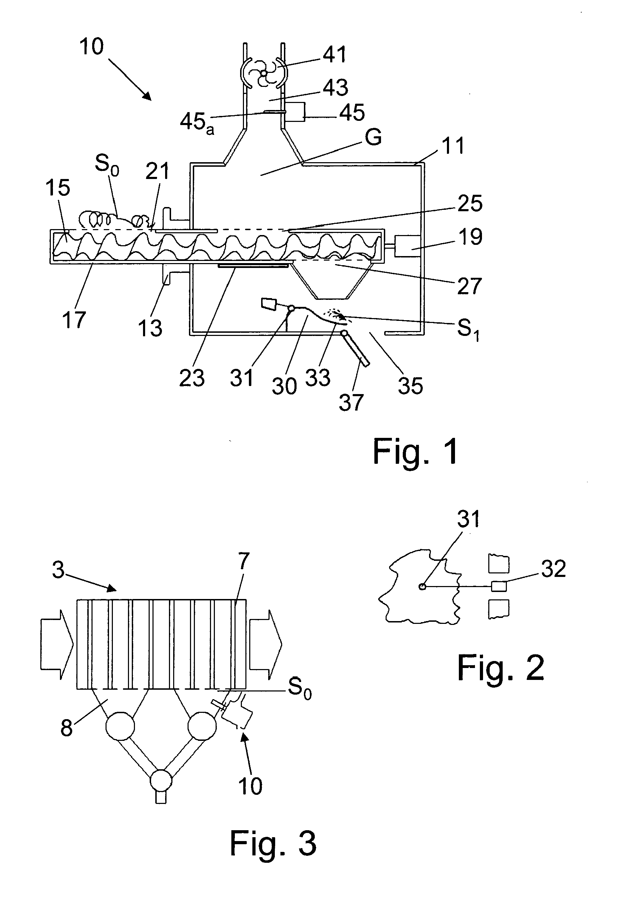

Im Folgenden ist die Erfindung anhand eines in der Zeichnung dargestellten Ausführungsbeispiels näher erläutert. Es zeigen
- Fig. 1: eine schematischen durch das Ausführungsbeispiel,
- Fig. 2: eine Teilansicht des Ausführungsbeispiels
- Fig. 3: eine schematische Darstellung einer Entstickungsanlage samt Ausführungsbeispiel.

In einer Feuerungsanlage, insbesondere einem Kohle-, Öl- oder Gaskraftwerk, einer Müllverbrennungsanlage oder einem Zementwerk wird das im Ofen entstehende Rauchgas auf dem Weg zum Kamin durch eine Entstickungsanlage 3 geleitet. Durch Einspritzen von Ammoniak (oder Harnstoff) als Reduktionsmittel sollen die Stickoxide (chemisch) reduziert werden. Wenn die Temperatur zu niedrig ist und/oder die Stöchiometrie zwischen Reduktionsmittel und Oxidationsmittel nicht stimmt, gibt es einen Schlupf, d.h. es bleibt nach der Reaktion unverbrauchter Ammoniak übrig. Dieser ist teils gasförmig im Rauchgas enthalten und teils an den Partikeln im Rauchgas, vorliegend als Staub So bezeichnet, angelagert. Bei dem Staub So handelt es sich insbesondere um Flugasche aus dem Ofen. An einem Abscheidefilter 7, beispielsweise einem Elektrofilter, wird der Staub So aus dem Rauchgas gefiltert und in einem Sammelbereich 8 gesammelt. Der Staub So kann beispielsweise bei der Zementherstellung wieder eingesetzt werden.

Um den Ammoniakgehalt im Rauchgas zu bestimmen, wird der gasförmige Anteil direkt gemessen. Für die Ermittlung des am Staub So angelagerten Anteils wird im Stand der Technik eine Probe entnommen, die Probe nass-chemisch aufgeschlossen, um die Konzentration des Ammoniaks zu messen, die Probe erhitzt, um den Ammoniak auszutreiben, und die Probe wieder nass-chemisch aufgeschlossen, um wiederum die Konzentration des Ammoniaks zu messen, die dann idealerweise Null ist.. Die Differenz ergibt den Schlupf des Ammoniaks, soweit er am Staub So angelagert ist. Diese Probenentnahme wird etwa alle acht Stunden durchgeführt und kann daher nicht für eine Online-Regelung der Entstickungsanlage 3 oder der Verbrennung im Ofen eingesetzt werden.

Erfindungsgemäß ist eine Messvorrichtung 10 vorgesehen, welche aus dem Staub So rasch den Ammoniakgehalt ermittelt., so dass das Ergebnis für eine Regelung der Verbrennung im Ofen verwendet werden kann.

Die Messvorrichtung 10 weist ein Gehäuse 11 auf, welches vorzugsweise mit einem Flansch 13 versehen ist. Die Messvorrichtung 10 wird in der Entstickungsanlage 3 im Sammelbereich 8 angeordnet, vorzugsweise mit dem Flansch 13 an einer Wand des Sammelbereichs 8 befestigt. Die Messvorrichtung 10 ist mit einer Fördereinrichtung versehen. Die Fördereinrichtung weist vorzugsweise eine Förderschnecke 15 auf. Die Förderschnecke 15 ist in einem Rohr 17 gelagert, welches teils innerhalb des Gehäuses 11 angeordnet ist und teils aus dem Gehäuse 11 hervorspringt und in das Innere des Sammelbereichs 8 ragt. Ein im Gehäuse 11 angeordneter Motor 19, dessen Drehzahl regelbar ist, dreht die Förderschnecke 15. Das Rohr 17 weist verschiedenen Fenster und Schlitze auf. Eines dieser Fenster, nämlich die Eintrittsöffnung 21, befindet sich außerhalb des Gehäuses 11. Ein Teil des Staubes So gelangt durch die Eintrittsöffnung 21 auf die Förderschnecke 15 und wird von ihr in das Innere des Gehäuses 11 befördert.

Im Inneren des Gehäuses 11 befindet sich eine Trenneinrichtung. Die Trenneinrichtung weist vorliegend eine Heizung 23 (oder eine andere Energiezufuhr) und eine Gasöffnung 25 auf. Vorliegend ist die Heizung 23 auf der Unterseite des Rohres 17 und die Gasöffnung 25 oberhalb davon angeordnet. Indem dem entnommenen Staub So Energie zugeführt wird, trennt sich bislang angelagertes Gas G, also vorliegend der Ammoniak, vom Staub So und entweich (durch die Gasöffnung 25). Vom Staub So verbleibt nach dem Trennen des Gases G entgaster Staub S₁, welcher durch eine Stauböffnung 27 aus dem Rohr 17 fällt und auf eine Waage 30 gelangt. Die Waage 30, welche auf dem Prinzip einer Balkenwaage beruht, ist um eine Welle 31 drehbar gelagert und normalerweise ausbalanciert. Mit der Welle 31 ist drehfest eine Fahne 32 verbunden, beispielsweise außerhalb des Gehäuses 11. Wenn der entgaste Staub S₁ auf die Waage 30 gelangt, genau gesagt in eine Waagschale 33derselben, dreht sich die Welle 31 und lenkt die Fahne 32 aus. Die Auslenkung der Fahne 32 wird gemessen, vorzugsweise induktiv. Der entgaste Staub S₁ rutscht von der Waagschale 33 nach unten und fällt durch eine Austrittsöffnung 35, welche durch eine Klappe 37 verschließbar ist. Das Integral über die zeitabhängige Auslenkung der Fahne 32 ist ein Maß fürden Massenstrom des entgasten Staubes S₁.

Das vormals angelagerte Gas G wird von einem Sauger 451 angesaugt, also von einem motorisch angetriebenen Lüfterrad. Der Sauger 41 saugt das Gas G in ein Saugrohr 43, in welches ein Sensor 45 ragt, vorzugsweise mittels einer Sonde 45a. Die Waage 30 und der Sensor 45 bilden die Messmittel der Messvorrichtung 10, mittels denen Messdaten der während des Betriebs laufend entnommenen Probe erlangt werden. Der Sensor 45 arbeitet nach einem an sich bekannten Funktionsprinzip, wonach Moleküle des Gases G sich auf der Oberfläche der Sonde 45a (oder einem anderen teil des Sensors 45) ablagern. Durch eine kapazitive Messung lässt sich die Art und die Menge der abgelagerten Moleküle des Gases G bestimmen, d.h. es ist eine qualitative und quantitative Messung möglich. Der Sensor 45 ist vorliegend auf Ammoniak eingestellt. Hinter dem Sauger 41 kann das Gas G die Messvorrichtung 10 verlassen.

Die Messwerte der Waage 30 und des Sensors 45 hängen u.a. von der Drehzahl des Motors 19 ab. Um die Messvorrichtung 10 zu kalibrieren, werden die Messwerte der Waage 30 und des Sensors 45 in Einklang mit den Messwerten aus den bekannten, externen Probenentnahmen und -analysen gebracht. Außer einer urspünglichen Kalibrierung hinsichtlich der Drehzahl des Motors 19 und sonstiger Parameter der Messvorrichtung 10 ist somit eine wiederholte Kalibrierung der Messvorrichtung 10 möglich, wobei die Intervalle (durchschnittlich beispielsweise acht Stunden) mit zunehmender Betriebsdauer auch länger werden können (beispielsweise auf einen Tag steigen können). Die Messwerte aus den bekannten, externen Probenentnahmen und -analysen werden vorzugsweise in einen Rechner eingespeist, an welchen die Messvorrichtung 10 angeschlossen ist und von welchem sie sich diese Messwerte für die Kalibrierung holt, d.h. die Kalibrierung erfolgt online (ohne Operator-Eingriff).

Zwischen der Kalibrierung entnimmt die Messvorrichtung 10 während des Betriebs laufend Proben aus dem Staub So und liefert laufend Messdaten, die dann Rückschlüsse auf den aktuellen Ammoniakgehalt im Staub So geben. Kombiniert mit Messdaten aus der Messung des gasförmigen Anteils im Rauchgas ergeben sich Rückschlüsse auf den gesamten aktuellen Ammoniakgehalt. Mit diesen Messdaten ist daher eine Regelung der Entstickungsanlage 3 (und der Verbrennung im Ofen) möglich, die kurzfristig auf Änderungen des Ammoniakgehalts reagieren kann. Die Messvorrichtung 10 ist ein Bestandteil eines entsprechenden Regelkreises.

Die Messvorrichtung 10 kann mittels anderer Sensoren 45 für andere Gase sensitiv sein, welche mittels Zufuhr von Energie aus dem entnommenen Staub So austreibbar sind.

### Bezugszeichenliste

- 3: Entstickungsanlage
- 7: Abscheidefilter
- 8: Sammelbereich
- 10: Messvorrichtung
- 11: Gehäuse
- 13: Flansch
- 15: Förderschnecke
- 17: Rohr
- 19: Motor
- 21: Eintrittsöffnung
- 23: Heizung
- 25: Gasöffnung
- 27: Stauböffnung
- 30: Waage
- 31: Welle
- 32: Fahne
- 33: Waagschale
- 35: Austrittsöffnung
- 37: Klappe
- 41: Sauger
- 43: Saugrohr
- 45: Sensor
- 45a: Sonde
- G: Gas
- So: Staub
- S₁: entgaster Staub

## Patentansprüche

1. Messvorrichtung für Staub (So) in Rauchgas, mittels welcher Proben des Staubes (So) entnehmbar sind, mit einem Gehäuse (10) und mit wenigstens einem im Gehäuse (11) angeordneten Sensor (45) zur Erlangung von Messdaten der entnommenen Probe, **dadurch gekennzeichnet, dass** während des Betriebs laufend Proben des Staubes (So) entnehmbar sind, wobei der Sensor (45) für Gas (G) sensitiv ist, welches am Staub (S₁) angelagert in das Gehäuse (11) gelangt.

2. Messvorrichtung nach Anspruch 1, **dadurch gekennzeichnet**, **dadurch gekennzeichnet, dass** während des Betriebs angelagertes Gas (G) vom Staub (So) trennbar ist, um dann sowohl vom Gas (G) als auch vom entgasten Staub (S₁) Messdaten zu erlangen.

3. Messvorrichtung nach Anspruch 2, **dadurch gekennzeichnet, dass** die Messvorrichtung (10) eine Trenneinrichtung (23, 25) aufweist, um das angelagerte Gas (G) vom Staub (So) zu trennen.

4. Messeinrichtung nach Anspruch 3, **dadurch gekennzeichnet, dass** die Trenneinrichtung (23, 25) eine Heizung (23) oder eine andere Energiezufuhr aufweist.

5. Messvorrichtung nach einem der Ansprüche 2 bis 4, **dadurch gekennzeichnet, dass** die Messvorrichtung (10) eine Waage (30) aufweist, um Messdaten des entgasten Staubes (S₁) zu erlangen.

6. Messvorrichtung nach Anspruch 5, **dadurch gekennzeichnet, dass** vorzugsweise die Auslenkung der Waage (30) messbar ist, insbesondere mittels einer Fahne (32) an der Waage (30).

7. Messvorrichtung nach einem der Ansprüche 2 bis 6, **dadurch gekennzeichnet, dass** mittels des Sensors (45) quantitative Messdaten des Gases (G) erlangbar sind.

8. Messvorrichtung nach Anspruch 7, **dadurch gekennzeichnet, dass** die Messvorrichtung (10) vorzugsweise einen Sauger (41) aufweist, um das Gas (G) zum Sensor (45) zu saugen.

9. Messvorrichtung nach einem der vorhergehenden Ansprüche, **dadurch gekennzeichnet, dass** die Messvorrichtung (10) eine Fördereinrichtung (15, 21) aufweist, um laufend Proben des Staubes (So) zu entnehmen und in das Innere des Gehäuses (11) zu fördern.

10. Messvorrichtung nach Anspruch 9, **dadurch gekennzeichnet, dass** die Fördereinrichtung (15, 21) eine Förderschnecke (15) aufweist.

11. Messvorrichtung nach Anspruch 10, **dadurch gekennzeichnet, dass** die Förderschnecke (15) in einem Rohr (17) gelagert ist, welches eine Eintrittsöffnung (21) für die Entnahme des Staubes (So), wenigstens eine Gasöffnung (25) zum Entweichen von Gas (G) und wenigstens einer Stauböffnung (27) zum Ausfallen von entgastem Staub (S₁), welcher vorzugsweise auf die Waage (30) fällt.

12. Messvorrichtung nach einem der vorhergehenden Ansprüche, **dadurch gekennzeichnet, dass** die Messvorrichtung (10) ein Bestandteil eines Regelkreises zur Regelung einer Entstickungsanlage (3) ist und/oder sensitiv für Ammoniak als Gas (G) ist.

13. Messvorrichtung nach einem der vorhergehenden Ansprüche, **dadurch gekennzeichnet, dass** die Messvorrichtung (10) mittels externer Probenentnahmen und Probenanalysen ursprünglich und/oder wiederholt, insbesondere online, kalibrierbar ist.

14. Messvorrichtung nach Anspruch 13, **dadurch gekennzeichnet, dass** die Messvorrichtung (10) mittels externer Probenentnahmen und Probenanalysen online kalibrierbar ist.

15. Verfahren zum Betrieb einer Messvorrichtung nach einem der vorhergehenden Ansprüche, **dadurch gekennzeichnet, dass** die Messvorrichtung (10) laufend Proben des Staubes (So) entnimmt, am Staub (So) angelagertes Gas (G) trennt und sowohl vom Gas (G) als auch vom entgasten Staub (S₁) Messdaten erlangt.
